Europäisches Patentamt

European Patent Office

Office européen des brevets

(11) Veröffentlichungsnummer: **0 447 957 A2**

# (12) EUROPÄISCHE PATENTANMELDUNG

(21) Anmeldenummer: **91103905.5**

(22) Anmeldetag: **14.03.91**

(51) Int. Cl.5: **H01J 61/02**, H01J 61/56

(30) Priorität: **19.03.90 DE 4008585**
**02.04.90 DE 4010498**
**09.04.90 DE 4011213**
**29.11.90 DE 4037947**

(43) Veröffentlichungstag der Anmeldung:
**25.09.91 Patentblatt 91/39**

(84) Benannte Vertragsstaaten:
**AT BE CH DE DK ES FR GB GR IT LI LU NL SE**

(71) Anmelder: **Holzer, Walter**
**Drosteweg 19**
**W-7758 Meersburg(DE)**

(72) Erfinder: **Holzer, Walter**
**Drosteweg 19**
**W-7758 Meersburg(DE)**

(74) Vertreter: **Riebling, Peter, Dr.-Ing.,**
**Patentanwalt**
**Rennerle 10, Postfach 31 60**
**W-8990 Lindau/B.(DE)**

(54) **Compact-Leuchtstofflampe.**

(57) Eine Compact-Leuchtstofflampe besteht aus einem Leuchtkörper mit einer oder mehreren Leuchtröhren und einem als getrennte Einheit aufgebauten, elektronischen Vorschaltgerät, welches in Art eines Adapters mit dem Leuchtkörper über Steckverbindungen elektrisch und mechanisch verbindbar ist.

Um eine möglichst kleine Baulänge der Compact-Leuchtstofflampe zu erhalten ist vorgesehen, daß die Steckverbindung zwischen dem Leuchtkörper und dem Vorschaltgerät sich in axialer Richtung mit der Compact-Leuchtstofflampe mindestens teilweise in den vom Leuchtkörper umschlossenen Raum hinein erstreckt.

EP 0 447 957 A2

Die Erfindung betrifft eine Compact-Leuchtstofflampe nach dem Oberbegriff des Patentanspruchs 1. Bei derartigen Compact-Leuchtstofflampen ist es bekannt, das Vorschaltgerät in der Art eines Adapters mit dem Leuchtkörper über Steckverbindungen zu verbinden. Bisher konnte jedoch noch nicht eine optimal kurze Baulänge einer derartigen Compact-Leuchtstofflampe erreicht werden.

Die vorliegende Patentanmeldung hat die Aufgabe, Lösungen für Leuchstoffröhren anzugeben, um sie sowohl platzsparend, aber auch wirtschaftlich vorteilhaft zu gestalten, indem das elektronische Vorschaltgerät und der Leuchtkörper in einfacher Art trennbar sind.

Compact-Leuchtstofflampen bestehen normalerweise aus einem Leuchtkörper mit einer oder mehreren Leuchtröhren und einem elektronischen Vorschaltgerät, welches entweder direkt mit dem Leuchtkörper zu einer Einheit integriert ist oder in Art eines Adapters mit dem Leuchtkörper über Steckverbindungen elektrisch und mechanisch verbindbar ist.

Die Lösung der gestellten Aufgabe erfolgt nach der technischen Lehre des Anspruches 1 dadurch, daß eine optimale Verkürzung der Baulänge dadurch erreicht wird, daß mindestens Teile des Vorschaltgerätes, wenn nicht sogar das gesamte Vorschaltgerät sich in den Innenraum der Leuchtröhren erstreckt und daß die lösbare Steckverbindung zwischen dem Vorschaltgerät und den Leuchtröhren sich ebenfalls mindestens teilweise in den Innenraum der Leuchtröhren erstreckt.

Unter dem Begriff "Innenraum der Leuchtröhren" wird hierbei ein zentrischer Hohlraum verstanden, dessen radiale Außenabmessungen durch von den Leuchtröhren umschlossenen Raum begrenzt wird.

Dieser innere Hohlraum ist ansonsten ungenutzt und kann für die erfindungsgemäßen Maßnahmen ausgenutzt werden. Von der Anschlußseite der Leuchtröhren gesehen ragen also in den Innenraum der Leuchtröhren mindestens ein Teil der Steckverbindung und/oder des Vorschaltgerätes hinein, mit dem Ergebnis, daß wesentliche Bauhöhe eingespart werden kann. Von besonderem Vorteil ist, daß das eventuell gegen Erwärmung empfindliche Bauteil des elektronischen Vorschhaltgerätes soweit in axialer Richtung in den Innenraum der Leuchtröhren verlegt werden können, daß sie außerhalb des hohen Temperaturbereichs der beheizten Elektroden liegen.

Um eine optimale Verkürzung der Baulänge zu erreichen, wird erfindungsgemäß vorgeschlagen, die starren und federnden Steckverbindungen zwischen dem Vorschaltgerät und dem Leuchtkörper innerhalb des Leuchtkörpers anzuordnen.

Dazu ist es zweckmäßig, einen Kupplungsring vorzusehen, der einerseits die Leuchtröhren in Löchern, die auf größeren Radien des Kupplungsringes liegen, aufnimmt, wobei im Zentrum des Kupplungsringes nach Einstecken des Vorschaltgerätes zumindest Teile desselben zu liegen kommen.

Eine solche Anordnung gestattet, im Kupplungsring starre Steckverbindungen des Leuchtkörpers etwa in Höhe der Anschlüsse der Leuchtröhren anzuordnen, welche im Kupplungsring nach innen gerichtet angeordnet werden können, wodurch kürzeste Verbindungsleitungen erreicht werden.

Am elektronischen Vorschaltgerät werden erfindungsgemäß federnde Steckverbindungen vorgesehen, welche in axialen Schlitzen gegen Berührung geschützt sind.

Die erfindungsgemäße Anordnung der starren Steckverbindungen im Kupplungsring eignet sich besonders zu einer automatischen Montage der Leuchtröhren im Ring und zur Verbindung der Anschlußdrähte der Leuchtröhren, indem man die starren Steckverbindungen mit Klemmeinrichtungen, z. Bsp. Schlitzen versieht, in welche die Anschlußdrähte geklemmt werden können.

Die federnden Steckverbindungen des elektronischen Vorschaltgerätes können erfindungsgemäß auch durch geeignete Formgebung als Rastungen ausgebildet weerden, welche den Kupplungsring mit den Leuchtröhren im eingesetzten Zustand sichern.

Andererseits eignen sich die federnden Steckverbindungen auch sehr gut zu einer direkten Verbindung mit einer Leiterplattte des elektronischen Vorschaltgerätes, in welches sie einfach eingelötet werden.

Eine besonders raumsparende Ausführung eines erfindungsgemäßen Vorschaltgerätes besteht darin, dieses als flaches Bauteil auszubilden, etwa nur in der Breite des Anschlußteils, z. Bsp. einem Edisongewinde E 27, wobei die zentrale Anordnung von Teilen des Vorschaltgerätes innerhalb der Leuchtröhren ausreichend Platz schafft, um alle elektronischen Bauelemente in einem solchen flachen Gehäuse unterzubringen.

Die Wiederverwendung des elektronischen Vorschaltgerätes wird dadurch erreicht, daß das röhrenförmige Gehäuse, welches das elektronische Vorschaltgerät enthält, als getrennte Baugruppe ausgeführt und mit dem Anschlußteil verbindbar und lösbar ist. Damit kann das Vorschaltgerät beim Auswechseln von der Leuchtröhre getrennt und mit einer neuen Leuchtröhre verbunden werden.

Eine besonders formschöne und kompakte Anordnung wird erfindungsgemäß dadurch erreicht, daß man die Leuchtröhre als Wendel Doppel-Wendel ausführt, welche das röhrenförmige Gehäuse umschließt.

Als lösbare Verbindung der Bauteile wird eine einfache, mehrpolige Steckverbindung vorgeschlagen. In besonderen Fällen ist eine kombinierte Dreh-Steck-Verbindung erfindungsgemäß vorzuziehen, welche neben der elektrischen Verbindung auch eine Sicherung in mechanischer Hinsicht bedeutet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, inbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1:
schematisiert in Seitenansicht eine Compact-Leuchtstofflampe nach der Erfindung in einer ersten Ausführungsform

Figur 2:
die Draufsicht auf die Anschlußseite des Leuchtkörpers mit Steckfassungen

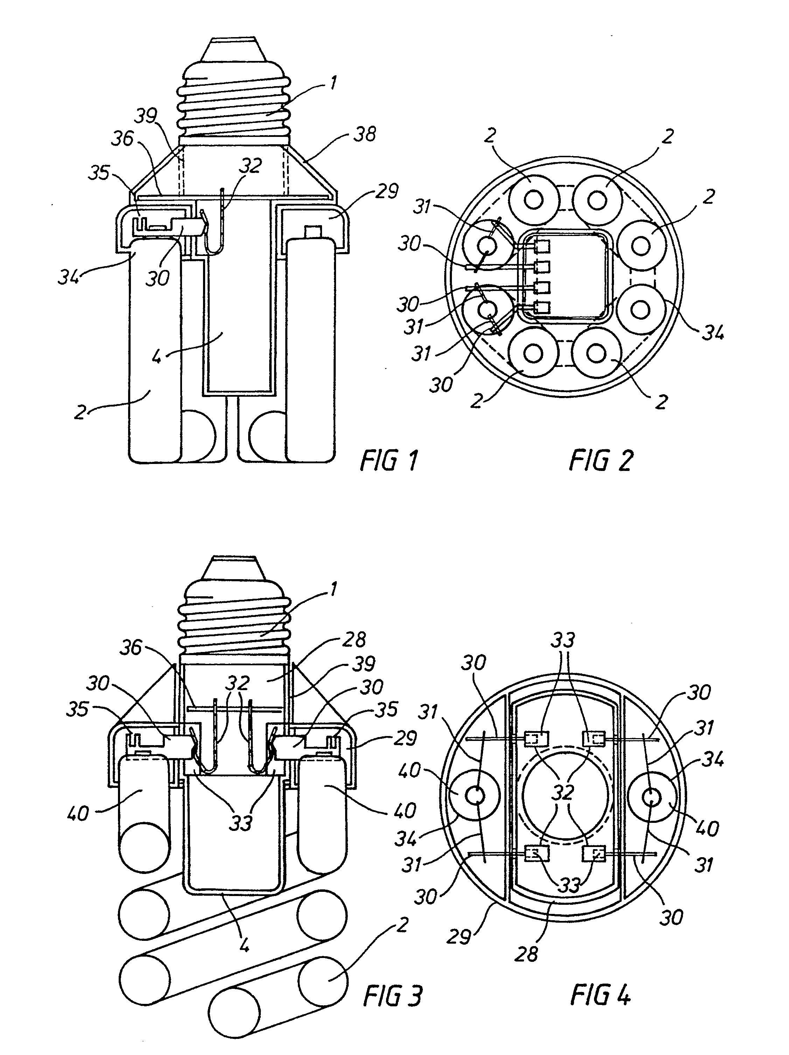

Figur 3:
ein gegenüber Figur 1 abgewandeltes Ausführungsbeispiel mit Doppel-Wendel

Figur 4:
die gegenüber Figur 2 abgewandelte Ausführung

Figur 5:
schematisiert die Anschlußseite eines Vorschaltgerätes mit Stecker in Seitenansicht

Figur 6:
die Seitenansicht der Anschlußplatte, auf der die Leuchtkörper montiert sind

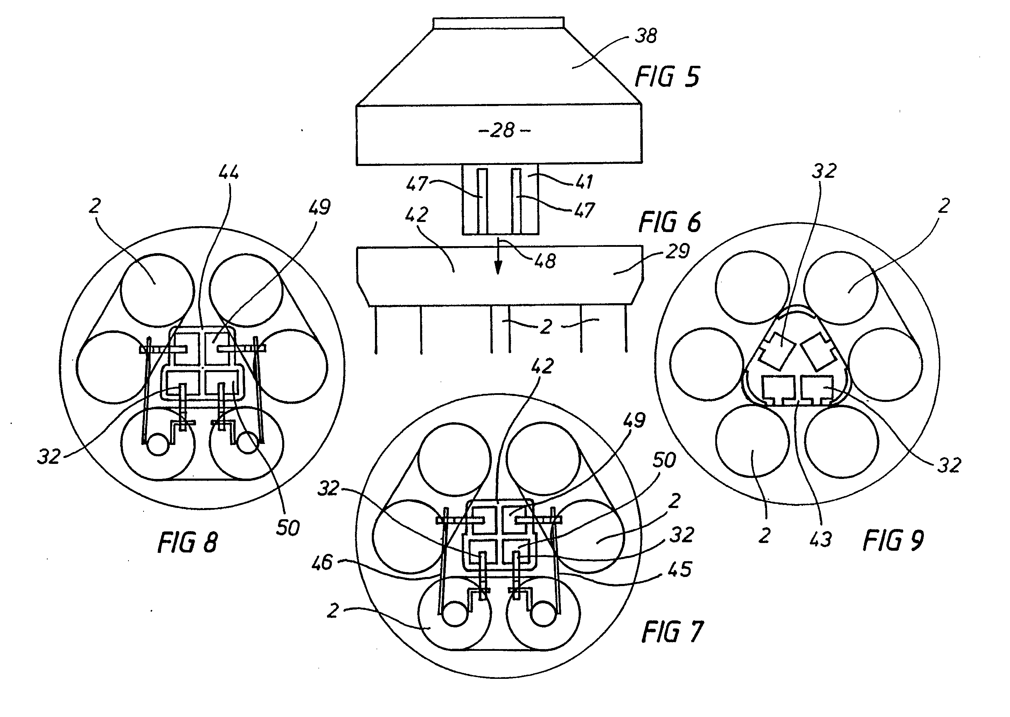

Figur 7:
die Draufsicht auf die Anschlußplatte nach Figur 6

Figur 8:
eine zweite Ausführungsform einer Anschlußplatte

Figur 9:
eine dritte Ausführungsform einer Anschlußplatte

Figur 10:
zum Größenvergleich die Seitenansicht einer Glühlampe nach dem Stand der Technik

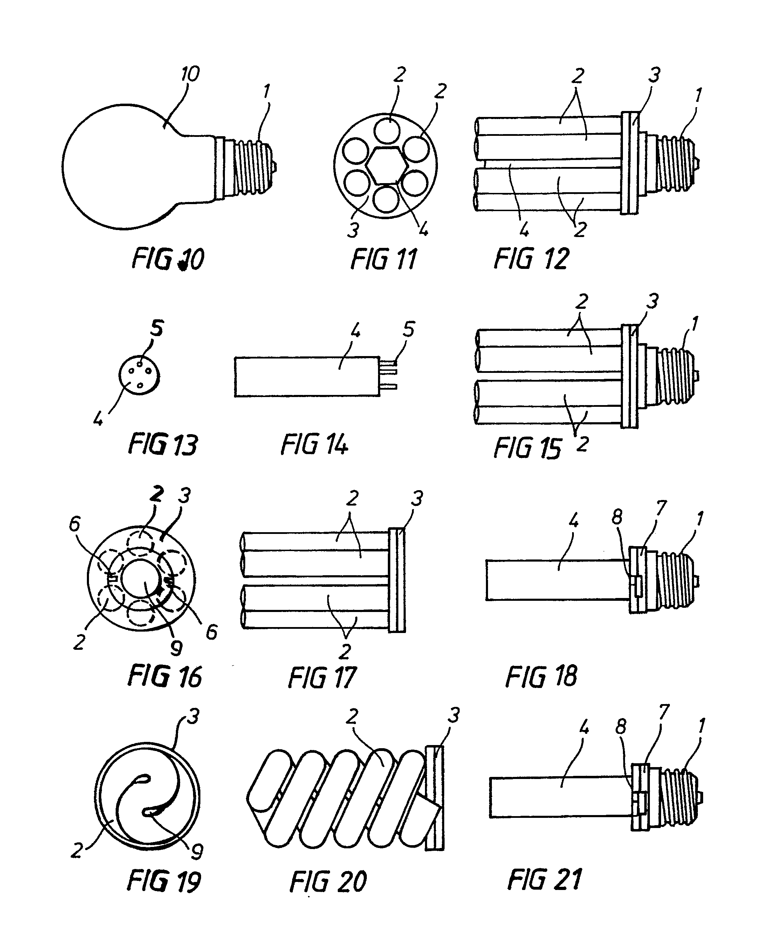

Figur 11:
Stirnansicht einer Compact-Leuchtstofflampe gemäß Figur 12

Figur 12:
Seitenansicht der Compact-Leuchtstofflampe gemäß Figur 11

Figur 13:
Ansicht auf die Anschlußseite eines Vorschaltgerätes

Figur 14:
die Seitenansicht des Vorschaltgerätes nach Figur 13

Figur 15:
die Seitenansicht einer Compact-Leuchtstofflampe

Figur 16:
Stirnansicht der Compact-Leuchtstofflampe nach Figur 17

Figur 17:
die Seitenansicht der Leuchtstofflampe

Figur 18:
die lösbare Verbindung eines Vorschaltgerätes mit einem Anschlußteil

Figur 19:
Stirnansicht einer weiteren Ausführungsform der Leuchtstofflampe mit Doppel-Wendel

Figur 20:
Seitenansicht der Leuchtstofflampe nach Figur 19

Figur 21:
Seitenansicht des lösbaren mit dem Anschlußteil verbundenen Vorschaltgerätes für die Leuchtstofflampe nach Figur 20

Figuren 22-24:
eine weitere Ausführungsform der Leuchtstofflampe

Figuren 25-27:
eine fünfte Ausführungsform der Leuchtstofflampe

Figur 1 zeigt ein Ausführungsbeispiel einer erfindungsgemäßen Compact-Leuchtstofflampe und demonstriert den extrem einfachen Aufbau einer erfindungsgemäßen Konstruktion. Selbst bei einer Anordnung von 8 Leuchtröhren (2) bleibt im Kupplungsring (29) genügend Platz, um im Zentrum das röhrenförmige Gehäuse (4) unterzubringen, welches Bauteile des Vorschaltgerätes (28) aufnimmt.

Innerhalb des Kupplungsringes (29) sind 4 starre Steckverbindungen (30) nebeneinander angeordnet und kommen beim Einstecken des Vorschaltgerätes (28) mit den federnden Steckverbindungen (32) in Kontakt.

Die federnden Steckverbindungen (32) sind z. Bsp. in einer Leiterplatte (36) eingelötet und stellen damit eine direkte Verbindung mit den anderen Bauteilen des Vorschaltgerätes (28) her.

Die starren Steckverbindungen (30) besitzen als Klemmverbindung Schlitze (35), um die Anschlußdrähte (31) der Leuchtröhren automatisch anklemmen zu können. Das automatische Anklemmen der Anschlußdrähte (31) wird erfindungsgemäß dadurch erleichtert, daß die starren Steckverbindungen (30) etwa in der Höhe der Anschlußdrähte (31) vorgesehen sind.

Das Vorschaltgerät (28) besitzt wie üblich bei dem dargestellten Beispiel ein Anschlußteil (1) in Form eines Edisongewindes E 27. Aus Gründen der Formgestaltung schließt daran ein kegelförmiges Kunststoffteil (38), welches reichlich Platz schafft zur Unterbringung der elektronischen Baulemente.

Da andererseits das röhrenrömige Gehäuse (4) innerhalb der Leuchtröhren (2) ausreichend Platz schafft, kann man erfindungsgemäß auf das konische Kunststoffteil (38) zugunsten einer platzsparenden Ausführung mit etwa quadratischem Querschnitt entsprechend den gestrichelt eingezeichneten Konturen (39) verzichten.

Da in Zukunft die Vorschaltgeräte (28) und die Leuchtkörper (27) meist getrennt zum Versand und zum Verkauf kommen werden, ist eine derartige Ausführung des Vorschaltgerätes (28) eine extrem kosten- und lagerraumsparende Lösung.

Figur 2 zeigt eine ander Variante einer erfindungsgemäßen Konstruktion mit einer doppelt gewendelten Leuchtröhre (2), ebenfalls im Schnitt dargestellt. Auch hier sind die Enden (40) der Leuchtröhre (2) in Löchern (34) des Kupplungsringes (29) gefaßt.

Da die Enden (40) der Leuchtröhre (2) diametral gegeüber liegen, wird erfindungsgemäß empfohlen, die starren Steckverbindungen (30) zu beiden Seiten des Vorschaltgerätes (28) anzuordnen. Die federnden Steckverbindungen (32) können über axiale Schlitze (33) von den starren Steckverbindungen (30) erreicht werden. Auch in diesem Beispiel sind die federnden Steckverbindungen (32) in einer Leiterplatte (36) eingelötet.

Ein großer Vorteil dieser Compactlampe mit doppelt gewendelter Leuchtröhre (2) besteht darin, daß im Kupplungsring (29) nur 2 Enden (40) vorhanden sind und daher in der Ebene des Kupplungsringes (29) wesentlich mehr Platz für die Bauelemente des Vorschaltgerätes (28) genutzt werden kann.

An dem dargestellten Beispiel ist der Vorteil einer flachen Bauweise mit den Konturen (39) des Vorschaltgerätes (28) gut zu erkennen.

Im übrigen sind gleichartige Teile von Fig. 1 und Fig. 2 mit den gleichen Bezugsnummern gekennzeichnet.

Die erfindungsgemäße Gestaltung einer Compact-Leuchtstofflampe, wie als Beispiel in Fig. 1 und Fig. 2 dargestellt, bedeutet durch die extreme Vereinfachung im Aufbau und ihre Eignung zur vollautomatischen Montage eine umwälzende Verbesserung bisheriger Lösungen.

Dabei ist zu beachten, daß die dargestellten Beispiele keineswegs beschränkend aufzufassen sind. Sie dienen lediglich der besseren Erläuterung des Erfindungsgedankens, aber andere gleichwertige Lösungen zum Verbinden der Anschlußdrähte (31) oder eine andere kosten- und platzsparende Gestaltung der Kunststoffteile beeinträchtigen den Schutzumfang der Anmeldung nicht. Auch die Verwendung anderer Anschlußteile statt dem dargestellten E 27-Gewinde sind äquivalente Lösungen.

Die Figuren 5 bis 7 zeigen ein weiteres Ausführungsbeispiel zur lösbaren Verbindung eines Vorschaltgerätes (28), welches in dem Kunststoffteil (38) untergebracht ist. An der vorderen Stirnseite, in axialer Richtung der Leuchtstofflampe vorstehend, ist hierbei ein Stecker (41) angeordnet, der in axialer Richtung ausgerichtete Kontakte (47) aufweist. Dieser Stecker ist in Steckrichtung in eine Steckfassung (42), die in Figur 6 dargestellt ist, einsteckbar. Die Steckfassung (42) ist hierbei in dem Kupplungsring (29) eingebaut.

Die Steckfassung (42) besteht im wesentlichen aus einer Steckaufnahme, wobei unterschiedliche Ausnehmungen (49, 50) definiert sind, um ein lagenrichtiges Einsetzen des Steckers (41) in die Steckfassung (42) zu gewährleisten.

Die Leuchtröhren (2) sind mit Hilfe von Anschlußfahnen (45, 46) mit den federnden Steckverbindungen (32) verbunden. Die federnden Steckverbindungen (32) ragen so in die Ausnehmungen (49, 50) der Steckfassung (42) hinein, daß beim Einstecken des Steckers (41) die Steckverbindungen (32) in Kontakt mit den Kontakten (47) des Steckers (41) kommen.

Die Figuren 8 und 9 zeigen äquivalente Lösungen, wobei dargestellt ist, daß die Steckfassung (43) (Figur 9) auch dreiecksförmig profiliert sein kann oder auch mit quadratischen Ausnehmungen (49, 50), um ebenfalls ein lagenrichtiges Einsetzen des Vorschaltgerätes (28) in die Steckfassung (42-44) zu erreichen.

Figur 10, Figur 11 und Figur 12 zeigen im gleichen Maßstab einen ungefähren Größenvergleich einer herkömmlichen 100 Watt Glühlampe (10) mit einer erfindungsgemäßen Compact-Leuchtstofflampe, aufgebaut aus serienmäßig auf dem Markt befindlichen Leuchtröhren. Es fällt sofort auf, daß der Durchmesser der neuen Lampe trotz 6 konzentrischen Leuchtröhren (2) wesentlich kleiner ist als bei der 100 Watt Glühlampe (10). Herkömmliche, auf dem Markt befindliche Leuchtstofflampen mit eingebautem elektronischen Vorschaltgerät habe jedoch einen noch wesentlich größeren Durchmesser.

Figur 11 zeigt schematisch die Anordnung des röhrenförmigen Gehäuses (4), welches zumindest die wesentlichen, teuren Bauteile des elektronischen Vorschaltgerätes enthält. Je nach den gewünschten Reflexeigenschaften wird das Gehäuse (4) rund, mehreckig oder anders profiliert gestaltet.

Figur 12 zeigt ein Beispiel des Aufbaues einer erfindungsgemäßen Lampe. Das Anschlußteil (1), in diesem Fall als herkömmliches Edison 27 Lampengewinde dargestellt, ist direkt mit einer Grundplatte (3) verbunden, die sechs Leuchtröhren (2) trägt. Üblicherweise handelt es sich dabei um eine einzige Leuchtröhre, welche mäanderförmig in sechs kurze Teile aufgeteilt ist. Zentral liegt zwischen den Leuchtröhren (2) das elektronische Vorschaltgerät in dem röhrenförmigen Gehäuse (4).

Die Figur 13, Figur 14 und Figur 15 zeigen eine gleichartig aufgebaute Lampe, jedoch mit einem ansteckbaren Gehäuse (4), welches mit den Steckerstiften (5) an die Grundplatte (3) angesteckt werden kann.

Die Figur 16, Figur 17 und Figur 18 zeigen eine andere beispielsweise Ausführung des Erfindungsgedankens. In diesem Fall ist das Gehäuse (4), fest an einen Sockel (7) angebaut, welcher auch mit dem Anschlußteil (1) fest verbunden ist.

Die Leuchtröhren (2) sind mit der Grundplatte (3) zu einer festen Einheit verbunden, die lediglich mit zwei Kontaktstiften (6) in dem Sockel (7) eingesteckt und durch Verdrehen in der Aussparung (8) auch mechanisch gesichert werden kann.

Das röhrenförmige Gehäuse (4) wird durch das Loch (9) der Grundplatte (3) gesteckt.

Durch die Zusammenfassung des röhrenförmigen Gehäuses (4) mit dem Sockel (7) und dem Anschlußteil (1) können auch Teile des elektronischen Vorschaltgerätes im Sockel (7) und dem Anschlußteil (1) untergebracht werden. Dadurch kann die Länge des röhrenförmigen Gehäuses (4) minimal ausgelegt werden.

Beim Auswechseln von schadhaften Leuchtröhren ist bei einer Ausführung wie in Figur 17 gezeigt, ein Kostenminimum erreicht.

Die beschriebenen Ausführungsbeispiele sind als schematische Möglichkeiten aufzufassen, die sowohl in den Abmessungen als auch in der Art der Formgebung nicht als beschränkend aufzufassen sind. Die Figur 18, Figur 19 und Figur 20 machen dies deutlich. In diesem Beispiel ist die Leuchtröhre (2) als Doppelwendel ausgeführt, sodaß sie in eingesetztem Zustand das rohrförmige Gehäuse (4) konzentrisch umschließt.

Diese erfindungsgemäße Ausführung zeichnet sich neben einer einfachen Herstellbarkeit auch durch eine direkte Lichtabstrahlung in axialer Richtung aus. Auf gleichem Raum ist überdies eine größere Länge der Leuchtröhre unterzubringen.

Die Erfindung gibt weitgehende Freiheit in der Gestaltung. Es können zwei, vier, sechs oder mehr Leuchtröhren, bzw. Teile davon nach Belieben parallel oder geneigt angeordnet werden. Die Anschlußteile können mit Gewinden oder mit Steck-Dreh-Befestigungen versehen werden, aber auch einfache Steckverbindungen sind möglich, um diesen Massenartikel billig herstellbar zu machen.

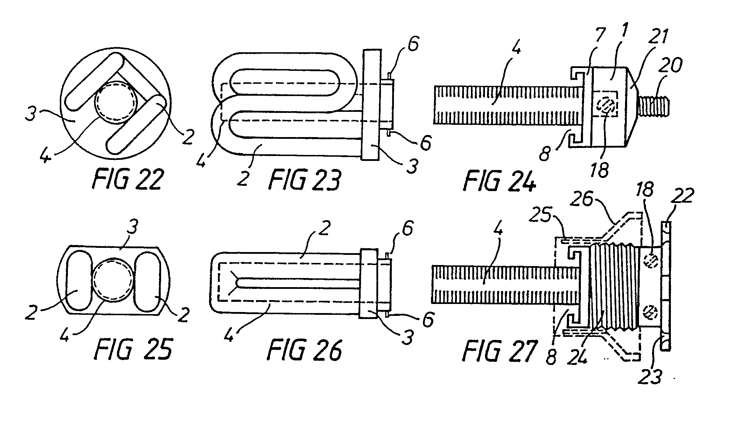

Figur 22 bis 24 zeigen eine einfache Ausführung mit vier parallel liegenden Leuchtröhren. Figur 23 zeigt das dazugehörige röhrenförmige Gehäuse (4) mit dem Anschlußteil (1). In diesen Teilen ist das Vorschaltgerät raumsparend untergebracht. Die Steck-Drehverbindung (8) im Sockel (7) nimmt die Anschlußstifte (6) der Grundplatte (3) auf und sichert nicht nur mechanische sondern auch die elektrische Verbindung der Teile.

Das Anschlußteil (1) ist in diesem Beispiel (Fig. 24) mit Schraubklemmen (18) innerhalb des Gehäuses (21) versehen, welche den direkten Anschluß mit dem Stromnetz, eventuell über einen Schalter eines Beleuchtungskörpers, gestatten.

Das Gehäuse (21) trägt auch ein Gewinde (20), wie es bei Lampenfassungen zum Einbau in Beleuchtungskörper üblich ist. Dadurch wird das erfindungsgemäße Vorschaltgerät zu einem festen Bauteil des Beleuchtungskörpers, und eine Fassung wird überflüssig.

Figur 25 bis 27 zeigt eine besonders flach bauende Variante, wobei gleiche Teile mit gleichen Nummern bezeichnet sind.

Figur 27 zeigt eine beispielsweise Ausführung, bei der das röhrenförmige Gehäuse (4) mit der Steck-Drehverbindung (8) eine Befestigungsplatte (22) mit Schraublöchern (23) aufweist, welche zur direkten Montage an der Decke oder an der Wand eines Raumes oder eines Beleuchtungskörpers dienen.

Ein Gewinde (24) gestattet das Aufschrauben einer Abdeckkappe (26) mit Innengewinde (25), welche nach Anklemmen der Stromzuführungen an die Klemmen (18) diese Klemmen (18) vor Berührung schützt.

Auf dem Gewinde (24) können in bekannter Art auch andere Halterungen oder Lampenschirme befestigt werden.

Durch eine Konstruktion wie oder ähnlich Figur 18 wird eine erfindungsgemäße Compact-Leuchtstofflampe zu einem preiswerten Beleuchtungskörper. Das Ausführungsbeispiel ist als solches aufzufassen und kann in allen bekannten Variationen modifiziert werden.

Aus den Abbildungen gehen ergänzend zur Beschreibung weitere Anregungen zu erfindungsgemäßen, konstruktiven Lösungen hervor.

**Patentansprüche**

1. Compact-Leuchtstofflampe, bestehend aus einem Leuchtkörper (27) mit einer oder mehreren Leuchtröhren (2) und einem als getrennte Einheit aufgebauten, elektronischen Vorschaltgerät (28), welches in Art eines Adapters mit dem Leuchtkörper (27) über Steckverbindungen (30, 32) elektrisch und mechanisch verbindbar ist, **dadurch gekennzeichnet,** daß die Kontaktgabe der Steckverbindung (30, 32;

41, 42-44) zwischen dem Leuchtkörper (27) und dem Vorschaltgerät (28) durch Einstecken in axialer Richtung der Compact-Leuchtstofflampe mindestens teilweise innerhalb des vom Leuchtkörper (27) umschlossenen Raumes bzw. dessen Halterung erfolgt.

2. Leuchtstofflampe nach Anspruch 1, **dadurch gekennzeichnet**, daß die Steckverbindung (30, 32; 41, 42-44) zentrisch zur Längsachse der Compact-Leuchtstofflampe angeordnet ist.

3. Leuchtstofflampe nach Anspruch 1 und 2, **dadurch gekennzeichnet**, daß ein Kupplungsring (29) vorhanden ist, der die Leuchtröhren (2) in Löchern (34) aufnimmt, die auf größeren Radien des Kupplungsringes (29) angeordnet sind und der im Zentrum zumindest Teile des Vorschaltgerätes (28) aufnimmt, und daß die starren Steckverbindungen (30) des Leuchtkörpers (27) im Kupplungsring (29) etwa in Höhe der Anschlüsse (31) der Leuchtröhren (2) nach innen gerichtet angeordnet sind.

4. Leuchtstofflampe nach einem der Ansprüche 1 bis 3, **dadurch gekennzeichnet,** daß die federnden Steckverbindungen (32) am elektronischen Vorschaltgerät (28) in achsparallelen Schlitzen (33) gegen Berührung geschützt angeordnet sind.

5. Leuchtstofflampe nach einem oder mehreren der vorstehenden Ansprüche 1-4, **dadurch gekennzeichnet**, daß die starren Steckverbindungen (30) mit Klemmeinrichtungen, z.B. Schlitzen (35) zum Einklemmen der Anschlußdrähte (31) versehen sind.

6. Leuchtstofflampe nach einem oder mehreren der vorstehenden Ansprüche 1-5, **dadurch gekennzeichnet**, daß die federnden Steckverbindungen (32) direkt in einer Leiterplatte (36) des elektronischen Vorschaltgerätes (28) eingelötet sind.

7. Leuchtstofflampe nach einem oder mehreren der vorstehenden Ansprüche 1-6, **dadurch gekennzeichnet**, daß das elektronische Vorschaltgerät (28) als flaches Bauteil ausgebildet ist, welches in der Breite (37) etwa dem Anschlußteil (1) z. Bsp. einem Edisongewinde E 27 entspricht.

8. Leuchtstofflampe nach einem oder mehreren der vorstehenden Ansprüche 1-7, **dadurch gekennzeichnet**, daß ein röhrenförmiges Gehäuse (4) als Verlängerung des Vorschaltgerätes (28) etwa zentral zwischen den Leuchtröhren (2) angeordnet ist.

9. Compact-Leuchtstofflampe nach einem oder mehreren der vorstehenden Ansprüche 1-8, **dadurch gekennzeichnet**, daß die Leuchtröhre (2) als Wendel oder Doppel-Wendel um das röhrenförmige Gehäuse (4) angeordnet ist.

10. Leuchtstofflampe nach einem Ansprüche 1-9, **dadurch gekennzeichnet**, daß die als Ring ausgebildete Leuchtröhre (2) eine Halterung (10) zur Aufnahme des röhrenförmigen Gehäuses (4) aufweist und daß die Halterung (10) in die Ebene der als Ring ausgebildeten Leuchtröhre (2) einklappbar ist.

FIG 1

FIG 2

FIG 3

FIG 4

7

FIG 5

FIG 6

FIG 7

FIG 8

FIG 9

FIG 10

FIG 11

FIG 12

FIG 13

FIG 14

FIG 15

FIG 16

FIG 17

FIG 18

FIG 19

FIG 20

FIG 21

FIG 22

FIG 23

FIG 24

FIG 25

FIG 26

FIG 27